# EUROPÄISCHE PATENTANMELDUNG

(11) **EP 1 174 831 A2**
(43) Veröffentlichungstag der Anmeldung: **23.01.2002**
(21) Anmeldenummer: 01117467.9
(22) Anmeldetag: 19.07.2001
(51) Int. Cl.: G07C 9/00, G06F 1/00

(54) **Internet-Endgerät mit Identifikationsmodul**

(30) Priorität: 19.07.2000 DE 20012538 U
(71) Anmelder: Dosch & Amand GmbH & Co. KG, 81679 München (DE)
(72) Erfinder: Dosch, Franz A., 83026 Rosenheim (DE)
(74) Vertreter: Grünecker, Kinkeldey, Stockmair & Schwanhäusser Anwaltssozietät

(57) **Zusammenfassung**

Internet-Endgerät (11), umfassend :
eine berührungsempfindliche Anzeige (12) und
eine Einrichtung (13) zur Kommunikation mit einem koppelbaren Identifikationsmodul (15),
wobei
das Endgerät (11) für eine Verbindung zum Internet (21) Konfigurationsdaten von dem Identifikationsmodul (15) erhält.

## Beschreibung

Die Erfindung betrifft ein Internet-Endgerät (Internet Terminal) und ein Identifikationsmodul (Subscriber Information Module, SIM) zur Verwendung mit dem Internet-Endgerät. Insbesondere betrifft die Erfindung ein mobiles Internet-Endgerät, im folgenden auch als WebPad bezeichnet, und eine Chipkarte, im folgenden auch als SmartCard bezeichnet.

Ein wachsendes Interesse von Computeranwendern am Internet führt zu Computern, die speziell auf das Internet abgestimmt sind. Diese speziellen Computer, im folgenden auch als Internet-Endgeräte bezeichnet, sollen einem Anwender die Nutzung des Internets so einfach und intuitiv wie möglich machen.

Gemäß dem Stand der Technik umfasst ein Internet-Endgerät beispielsweise eine Tastatur mit spezifischen Tasten oder eine Computermaus mit zusätzlichen Rädchen, die das Navigieren im Internet vereinfachen. Andere Internet-Endgeräte gemäß dem Stand der Technik umfassen jeweils eine berührungsempfindliche Anzeige, die das Navigieren durch direkte Auswahl auf der Anzeige ermöglichen. Um einer steigenden Mobilität der Anwender Rechnung zu tragen, werden Internet-Endgeräte tragbar und schnurlos. Solche mobilen Internet-Endgeräte sind kompakt und im wesentlichen flach, und werden daher auch als WebPads bezeichnet.

Computer im allgemeinen und Internet-Endgeräte im besonderen werden zunehmend mit einem vorinstallierten Betriebssystem und vorinstallierten Anwendungsprogrammen ausgestattet, um den Anwendern ein zeitaufwendiges und umständliches Installieren der Programme zu ersparen. Die Programme werden dabei mit Standardeinstellungen konfiguriert, die für eine Mehrheit der Anwender zutreffen sollen.

Das Benutzen der Computer und Internet-Endgeräte erfordert allerdings weiterhin von einem Anwender, dass entsprechende Änderungen der Konfiguration von dem Anwender durchgeführt werden müssen. Für ein Internet-Endgerät müssen beispielsweise Einstellungen an einem Internet-Browser und für eine Verbindung zum Internet durchgeführt werden. Die Verbindung zum Internet umfasst eine physikalische Verbindung zu einem Internet-Dienstanbieter (Internet Service Provider) und eine logische Verbindung über den Internet-Dienstanbieter in das Internet. Die physikalische Verbindung umfasst beispielsweise eine Schnittstelle zwischen dem Computer bzw. Internet-Endgerät und einem öffentlichen Telefonnetz, über das eine Verbindung zu dem Internet-Dienstanbieter aufgebaut wird. Um eine Verbindung des Computers zu dem öffentlichen Telefonnetz zu ermöglichen, müssen sowohl die Verbindung von dem Computer an die Schnittstelle als auch von der Schnittstelle an das öffentliche Telefonnetz richtig konfiguriert sein. Die Verbindung zum Internet-Dienstanbieter erfordert beispielsweise eine Telefonnummer des Internet-Dienstanbieters, eine Identifikation des Anwenders und ein Kennwort. Es ist verständlich, dass für den richtigen Aufbau einer Verbindung ein Fachwissen sowie eine Vielzahl verschiedener Informationen notwendig sind, die es insbesondere einem Anwender, für den die Nutzung des Internets neu und unbekannt ist, schwer, wenn nicht unmöglich machen, die erforderlichen Einstellungen selbst vorzunehmen.

Es ist somit die Aufgabe der Erfindung, Vorrichtungen bereitzustellen, die den Aufwand zum Konfigurieren eines Computers, insbesondere eines Internet-Endgeräts, verringern und somit den Aufbau einer Verbindung zum Internet wesentlich vereinfachen.

Diese Aufgabe wird durch die Gegenstände der unabhängigen Ansprüche 1 und 10 erfindungsgemäß gelöst. Bevorzugte Ausgestaltungen Erfindung sind Gegenstände der abhängigen Ansprüche.

Gemäß einem ersten Aspekt der Erfindung kann auch ein technisch unversierter Anwender Internet-Dienste mühelos nutzen.

Gemäß einem zweiten Aspekt kann die Verbindung zu einem vordefinierten Internet-Dienstanbieter automatisch und ohne Benutzereingriff durchgeführt werden, um dem Anwender nur die von diesem Internet-Dienstanbieter angebotenen Dienste verfügbar zu machen.

Gemäß einem dritten Aspekt kann die Verbindung zu einem vordefinierten Internet-Portal automatisch und ohne Benutzereingriff durchgeführt werden, um dem Anwender nur die über dieses Internet-Portal erreichbaren Informationen verfügbar zu machen.

Gemäß einem vierten Aspekt kann ein unberechtigter oder unerwünschter Zugang zum Internet oder dem Internet-Portal durch Dritte verhindert werden.

Gemäß der Erfindung wird die Verbindung zum Internet durch ein Internet-Endgerät mit einer Einrichtung zur Kommunikation mit einem koppelbaren Identifikationsmodul und einem Identifikationsmodul mit Konfigurationsdaten für die Verbindung des Internet-Endgeräts zum Internet erreicht, wobei das Internet-Endgerät für die Verbindung Konfigurationsdaten von dem Identifikationsmodul erhält. Das Internet-Endgerät ist vorzugsweise als WebPad ausgeführt. Das Internet-Endgerät kann eine berührungsempfindliche Anzeige sowie eine Einrichtung zur drahtlosen Kommunikation, vorzugsweise gemäß dem DECT- (Digital European Cordless Telecommunication-) Standard, mit einer Basisstation umfassen, wobei das Internet-Endgerät die Verbindung zum Internet über die Einrichtung zur drahtlosen Kommunikation aufbaut. Weiterhin kann das Internet-Endgerät die Verbindung automatisch nach Kommunikation mit dem Identifikationsmodul aufbauen. Das Internet-Endgerät kann die Verbindung über einen Internet-Dienstanbieter aufbauen, der durch die Konfigurationsdaten bestimmt ist. Weiterhin kann sich das Internet-Endgerät automatisch zur Kommunikation mit dem Identifikationsmodul aktivieren, wenn das Identifikationsmodul an das Internet-Endgerät, beispielsweise durch Einschieben des Identifikationsmoduls in das Internet-Endgerät, gekoppelt wird. Weiterhin kann das Internet-Endgerät die Verbindung ausschließlich nach Kommunikation mit einem Identifikationsmodul aufbauen, das Schlüsseldaten enthält, die das Internet-Endgerät freischalten. Das Identifikationsmodul kann als kontaktbehaftete Chipkarte oder als kontaktloser Transponder ausgeführt sein. Das Identifikationsmodul kann Zugangsdaten zu einem Internet-Dienstanbieter, Teilnehmerdaten, die einen Benutzer des Internet-Endgeräts identifizieren, Schlüsseldaten, die das Internet-Endgerät freischalten, Dienstleistungsdaten, die freigeschaltete Dienstleistungen des Internet-Dienstanbieters spezifizieren, Zahlungsdaten, die eine Vergütung für die Verbindung und Dienste ermöglichen, Guthabendaten, die eine aktuelle Abrechnung der Verbindung und Dienste ermöglichen, und Verschlüsslungsdaten zum Sichern der Verbindung enthalten.

Gemäß der Erfindung kann weiterhin mittels des Identifikationsmoduls sichergestellt werden, dass die Verbindung des Internet-Endgeräts zum Internet ausschließlich über einen vorbestimmten Internet-Dienstanbieter stattfinden kann oder ausschließlich vorbestimmte Informationsdienste zur Verfügung gestellt werden. Somit kann zum einen das Diebstahlrisiko für das Internet-Endgerät gesenkt werden, da die Erstellung eines geeigneten Identifikationsmoduls erforderlich wird, und zum anderen die Verwendung eines bestimmten Internet-Dienstanbieters für das Internet-Endgerät festgelegt werden, wodurch eine teilweise oder vollständige Finanzierung des Internet-Endgeräts durch den Internet-Dienstanbieter ermöglicht wird.

Der unberechtigte oder unerwünschte Zugang zum Internet oder einem Internet-Portal durch Dritte verhindert werden, indem das Identifikationsmodul von dem Internet-Endgerät entfernt wird.

Ein Nachbau eines Identifikationsmoduls wird beispielsweise durch einen Berechtigungscode (Software Dongle), der mit dem InternetEndgerät abgestimmt ist, verhindert oder zumindest erheblich erschwert.

Im folgenden werden Vorteile sowie bevorzugte Ausführungsformen der Erfindung unter Bezugnahme auf die beigefügten Zeichnungen näher erläutert. Dabei zeigen die Zeichnungen im einzelnen:
Fig. 1 eine schematische Darstellung eines Internet-Endgeräts, das gemäß einer bevorzugten Ausführungsform als WebPad ausgeführt ist, und eines Identifikationsmoduls, das gemäß einer bevorzugten Ausführungsform als Chipkarte ausgeführt ist,
Fig. 2 eine schematische Darstellung der Verbindung des Internet-Endgeräts gemäß der bevorzugten Ausführungsform an das Internet über einen schnurgebundenen Anschluss an ein öffentliches Telefonnetz,
Fig. 3 eine schematische Darstellung der Verbindung des Internet-Endgeräts gemäß der bevorzugten Ausführungsform an das Internet über einen schnurlosen Anschluss an das öffentliche Telefonnetz,
Fig. 4 eine schematische Darstellung einer mobilen Verbindung des Internet-Endgeräts gemäß der bevorzugten Ausführungsform an das Internet über ein Mobilfunknetz,
Fig. 5 eine schematische Darstellung der mobilen Verbindung des Internet-Endgeräts gemäß der bevorzugten Ausführungsform an das Internet über das Mobilfunknetz mittels eines Mobilfunktelefons, und
Fig. 6 eine schematische Darstellung zur Veranschaulichung eines Systems zur Verbreitung des Internet-Endgeräts gemäß der bevorzugten Ausführungsform durch Subventionierung des Internet-Endgeräts.

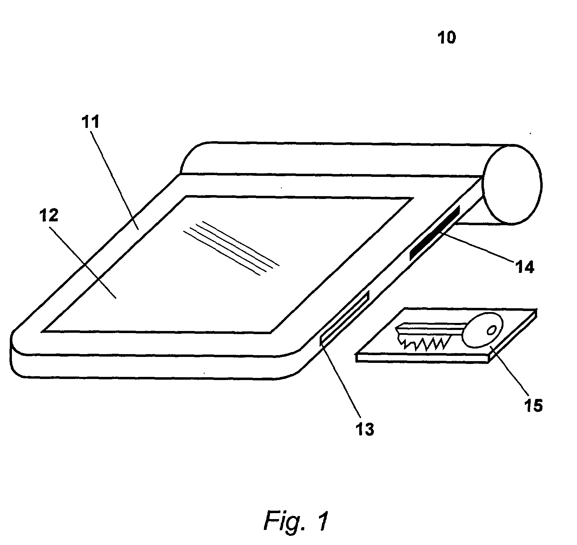

Fig. 1 zeigt ein System 10 umfassend das Internet-Endgerät 11 und das Identifikationsmodul 15 gemäß der bevorzugten Ausführungsform der Erfindung. Das Internet-Endgerät 11 umfasst eine berührungsempfindliche Anzeige 12, eine Einrichtung 13 zur Kommunikation mit dem koppelbaren Identifikationsmodul 15 und eine Einrichtung 14 zur Kommunikation. Wie in Fig. 1 gezeigt, wird die berührungsempfindliche Anzeige 12 von einem Gehäuse des Internet-Endgräts 11 rahmenartig umschlossen. Somit kann der Anwender das Internet-Endgerät 11 vor sich, beispielsweise auf einem Tisch, ablegen und den Inhalt der Anzeige 12 studieren. Durch entsprechende Formgebung des Gehäuses kann eine geringfügige Neigung der Anzeige 12 erreicht werden, wodurch die Lesbarkeit der Anzeige 12 verbessert werden kann.

Die Einrichtung 13 zur Kommunikation mit dem Identifikationsmodul 15 ist so ausgelegt, dass das Internet-Endgerät 11 Konfigurationsdaten von dem Identifikationsmodul 15 erhalten kann. Die Ausgestaltung der Einrichtung 13 zur Kommunikation mit dem Identifikationsmodul 15 richtet sich nach den Merkmalen des Identifikationsmoduls 15. In der bevorzugten Ausführungsform ist das Identifikationsmodul 15 als kontaktbehaftete Chipkarte ausgeführt, wodurch sich entsprechende Abmessungen und Anordnungen von Kontakten für die Einrichtung 13 zur Kommunikation mit dem Identifikationsmodul 15 ergeben. Alternativ kann das Identifikationsmodul 15 als kontaktloser Transponder, beispielsweise als Radiofrequenz-Identifikationsmodul (Radio-Frequency Identification Module, RFID) ausgeführt sein. Der Transponder, der auch als kontaktlose Chipkarte bezeichnet wird, gestattet eine einfachere Handhabung, ist robuster ausgestaltet und weist eine geringere Störanfälligkeit auf. Da Transponder eine gewisse Kommunikationsreichweite aufweisen, ist es nicht notwendig, den Transponder 15 in die Einrichtung 13 zur Kommunikation einzustecken, um die Konfigurationsdaten in das Internet-Endgerät 11 zu übertragen.

Die Einrichtung 14 dient als Schnittstelle zwischen dem Internet-Endgerät 11 und einem Kommunikationsnetz, das die Verbindung zum Internet ermöglicht. Bei dem Kommunikationsnetz kann es sich um ein öffentliches Telefonfestnetz oder Mobilfunknetz handeln. Alternativ kann das Internet-Endgerät 11 über die Einrichtung 14 mit einem Computernetzwerk, beispielsweise einem lokalen Netz (Local-Area Network, LAN) oder weiträumigem Netz (Wide-Area Network, WAN) verbunden werden. Die Ausgestaltung der Einrichtung 14 richtet sich dabei nach den Merkmalen des jeweiligen Kommunikationsnetzes. Bei der Einrichtung 14 kann es sich alternativ um eine herkömmliche serielle, parallele oder USB- (Universal Serial Bus-) Schnittstelle oder dergleichen handeln, wobei die Verbindung mit dem, beispielsweise, öffentlichen Telefonfestnetz über ein Modem erfolgen kann. Bei dem öffentlichen Telefonfestnetz kann es sich sowohl um ein analoges als auch ein digitales und insbesondere ein ISDN-Telefonsystem handeln.

Das Internet-Endgerät 11 weist weiterhin einen Prozessor und Speicher auf. In einem nichtflüchtigen Teil des Speichers befindet sich ein Betriebssystem, beispielsweise auf der Basis von Linux, und ein Internet-Browser. Vorzugsweise umfasst das Internet-Endgerät ein Betriebssystem, das augenblicklich startet (instant-on Operating System). Das Internet-Endgerät 11 umfasst weiterhin eine Stromversorgung, die vorzugsweise als Akkumulator ausgeführt ist. Das Internet-Endgerät 11 kann außerdem eine Einrichtung zum Aufnehmen von Betriebsenergie, bespielsweise von einer externen Stromversorgung, umfassen. Das Internet-Endgerät 11 kann weiterhin Standardschnittstellen, eine Einrichtung zum Laden des Akkumulators, Plattenspeicher, Kamera und andere herkömmliche Computereinrichtungen umfassen.

Das Identifikationsmodul 15 enthält, vorzugsweise in verschlüsselter Form, Konfigurationsdaten für die Verbindung des Internet-Endgeräts 11 zum Internet. Die Konfigurationsdaten können dabei in dem Kommunikationsmodul 15 in Blöcken angeordnet sein. Ein erster Block enthält die Zugangsdaten zum Internet-Dienstanbieter; die Zugangsdaten umfassen Kunden-Nummer, Benutzer-Kennziffer, Zugangscode, persönliche Identifikationsnummer (Personal Identification Number, PIN) und Telefonnummer des Einwahlknotens mit Portalanwahl. Ein zweiter Block enthält Daten zu Inhalt und Diensten; die Daten umfassen allgemeine Informationsauswahl, persönliche Informationsauswahl, allgemeine Diensteauswahl, persönliche Diensteauswahl und Informationen zum persönlichen Mail-Server. Ein dritter Block enthält Berechtigungsdaten; die Berechtigungsdaten umfassen eine Endgeräte-Identifikationsnummer und eine ldentifikationsmodul-ldentifikationsnummer. Vorzugsweise enthält das Identifikationsmodul 15 zusätzlich einen verschlüsselten Berechtigungscode (Software Dongle), der den Einsatz von nachgebauten bzw unerlaubten Identifikationsmodulen verhindert bzw. erschwert. Der Berechtigungscode ist mit dem Internet-Endgerät 11 abgestimmt.

Das System 10 zur Konfiguration des Internet-Endgeräts 11 mittels des Identifikationsmoduls 15 kann in ein vorhandenes Chipkartensystem eingebunden werden, beispielsweise kann das Identifikationsmodul 15 Teil einer Chipkarte zur Authentisierung, beispielsweise einer GeldKarte, sein. Weiterhin kann das Identifikationsmodul 15 Konfigurationsdaten enthalten, die beispielsweise zur Authentisierung des Anwenders im Internet, beispielsweise für Online-Bestellungen und Online-Zahlungen, dienen. Das Identifikationsmodul 15 kann weiterhin Konfigurationsdaten enthalten, die es ermöglichen, die Daten, die über die Verbindung zum Internet übertragen werden, zu verschlüsseln.

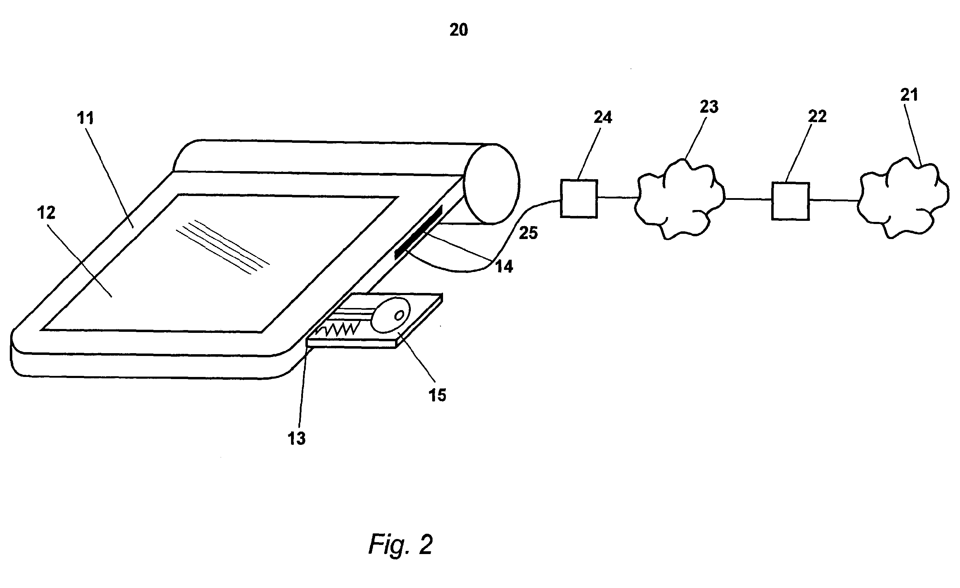

Fig. 2 zeigt ein System 20 mit einem schnurgebundenen Anschluss an das öffentliches Telefonnetz 23. Das Internet-Endgerät 11 enthält eine herkömmliche serielle Schnittstelle 14, die über eine serielle Leitung 25 mit einem herkömmlichen Modem 24 verbunden ist. Das Modem 24 ist mit dem öffentlichen Telefonnetz 23 verbunden, wobei das öffentliche Telefonnetz analog oder digital sein kann. Die Verbindung des Internet-Endgeräts 11 zum Internet 21 erfolgt über einen Internet-Dienstanbieter 22, der mit dem öffentlichen Telefonnetz 23 verbunden ist. Wenn das Identifikationsmodul 15 mit der Einrichtung 13 zur Kommunikation gekoppelt wird, erhält das Internet-Endgerät 11 die zum Aufbau einer Verbindung zum Internet 21 erforderlichen Konfigurationsdaten von dem Identifikationsmodul 15. Die Verbindung zum Internet 21 unterstützt beispielsweise Empfangen und Senden von elektronischen Briefen (Emails) und Surfen im World-Wide Web. In einer Ausführungsform erfolgt in Verbindung zum Internet zunächst über ein Portal des Internet-Dienstanbieters 22, d. h. eine Startseite mit Inhalten des Internet-Dienstanbieters 22. In der bevorzugten Ausführungsform besteht die Verbindung zum Internet ausschließlich über dieses Portal, so dass der Internet-Dienstanbieter 22 zumindest teilweise Einfluss auf die Inhalte hat, die auf der Anzeige 12 dargestellt werden.

Das Internet-Endgerät 11 kann die Verbindung automatisch nach der Kommunikation mit dem Identifikationsmodul 15 aufbauen. Dabei erfolgt der Aufbau der Verbindung zum Internet 21 über den Dienstanbieter 22, der durch die Konfigurationsdaten bestimmt ist. Da das Internet-Endgerät 11 die Verbindung ausschließlich nach Kommunikation mit einem Identifikationsmodul 15 aufbaut, das Schlüsseldaten enthält, die das Internet-Endgerät 11 freischalten, kann sichergestellt werden, dass die Verbindung zum Internet 21 ausschließlich über den vorbestimmten Internet-Dienstanbieter 22 erfolgt. Die Kommunikation zwischen dem Internet-Endgerät 11 und dem Kommunikationsmodul 15 erfolgt nach einem vorbestimmten Mechanismus. Der Mechanismus kann eine einseitige Authentisierung umfassen, bei der sich entweder das Internet-Endgerät 11 gegenüber dem Identifikationsmodul 15 oder das Identifikationsmodul 15 gegenüber dem Internet-Endgerät 11 legitimiert. Alternativ kann der Mechanismus eine gegenseitige Authentisierung umfassen, bei der sich das Internet-Endgerät 11 und das Identifikationsmodul 15 gegeneinander legitimieren. Die Authentisierung kann beispielsweise symmetrische oder asymmetrische Verschlüsselungsverfahren verwenden. Durch die gegenseitige Authentisierung kann ein Endgerät/Modul-Paar gebildet werden, so dass ein bestimmtes Internet-Endgerät 11 ausschließlich über ein bestimmtes Identifikationsmodul 15 freigeschaltet werden kann.

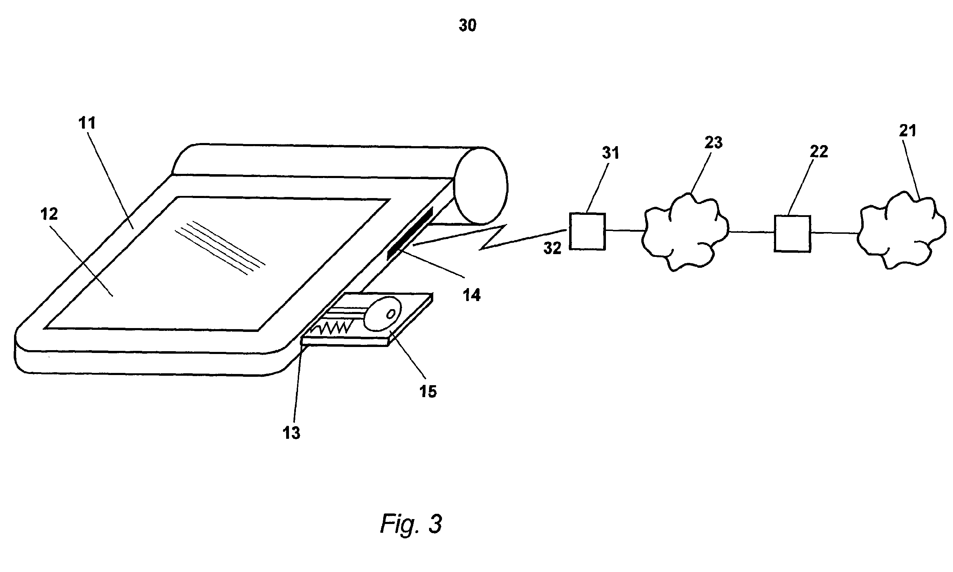

Fig. 3 zeigt ein System 30, das beispielsweise für den Einsatz zu Hause oder im Büro geeignet ist, mit einem schnurlosen Anschluss an das öffentliches Telefonnetz 23. Gemäß dieser Ausführungsform ist die Schnittstelle 14 zur drahtlosen Kommunikation 32 mit einer Basisstation 31 geeignet. Die drahtlose Kommunikation 32 kann dabei beispielsweise optisch, d. h. mittels Licht, oder per Funk, d. h. mittels Radiowellen, erfolgen. Die Reichweite der Kommunikation 32 wird dem Bewegungsradius des Anwenders angepasst sein. Während die Reichweite für eine optische Kommunikation 32 auf wenige Zentimeter oder Meter beschränkt sein kann, kann sie für eine Funkkommunikation 32 in der Größenordnung von 100 m liegen. Bei der optischen Kommunikation 32 kann beispielsweise Infrarotlicht verwendet werden. Die Funkkommunikation 32 kann vorzugsweise gemäß dem DECT-Standard erfolgen. Insbesondere eignet sich der DECT DMAP-Standard für die Kommunikation 32 zwischen dem Internet-Endgerät 11 und der Basisstation 31, die mit dem öffentlichen Telefonnetz verbunden ist. Alternativ können die Schnittstelle 14 und die Basisstation 31 gemäß der Bluetooth-Spezifikation für drahtlose Kommunikation von Daten und Sprache ausgeführt sein.

Während die Schnittstelle 14 vollständig in das Internet-Endgerät integriert sein kann, ist die Schnittstelle 14 in der bevorzugten Ausführungsform als PCMCIA-(Personal Computer Memory Card International Association-) bzw. PC-Karte oder dergleichen ausgeführt, so dass die Schnittstelle 14 durch den Anwender problemlos ausgetauscht werden kann. Somit kann der Anwender die jeweils geeignete drahtgebundene oder drahtlose Schnittstelle 14 auswählen und mit dem Internet-Endgerät 11 verwenden.

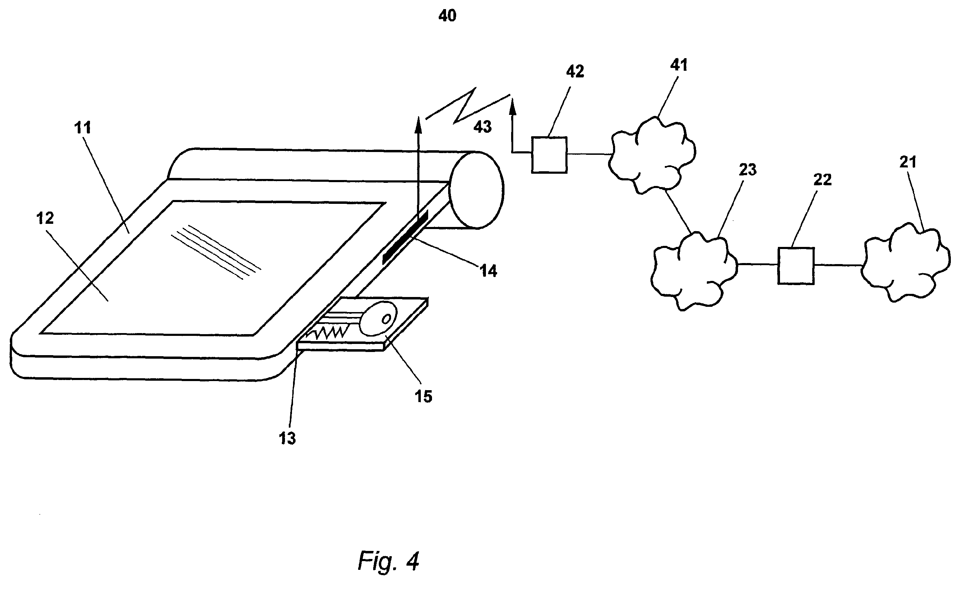

Fig. 4 zeigt ein mobiles System 40, das zur Verwendung in beispielsweise einem zellularen Mobilfunknetz 41 geeignet ist. Dabei ist die Schnittstelle 14 beispielsweise gemäß dem GSM- (Global System for Mobile Communications-) Standard oder dem UMTS- (Universal Mobile Telecommunications System-) Standard ausgeführt und kann eine drahtlose Verbindung 43, d. h. eine Telefonverbindung, mit einer Basisstation 42 des Mobilfunknetzes 41 aufbauen. Die Verbindung zum Internet kann dann direkt über den Internet-Dienstanbieter 22, oder wie in Fig. 4 gezeigt, über das öffentliche Telefonnetz 23 und den Internet-Dienstanbieter 22 erfolgen.

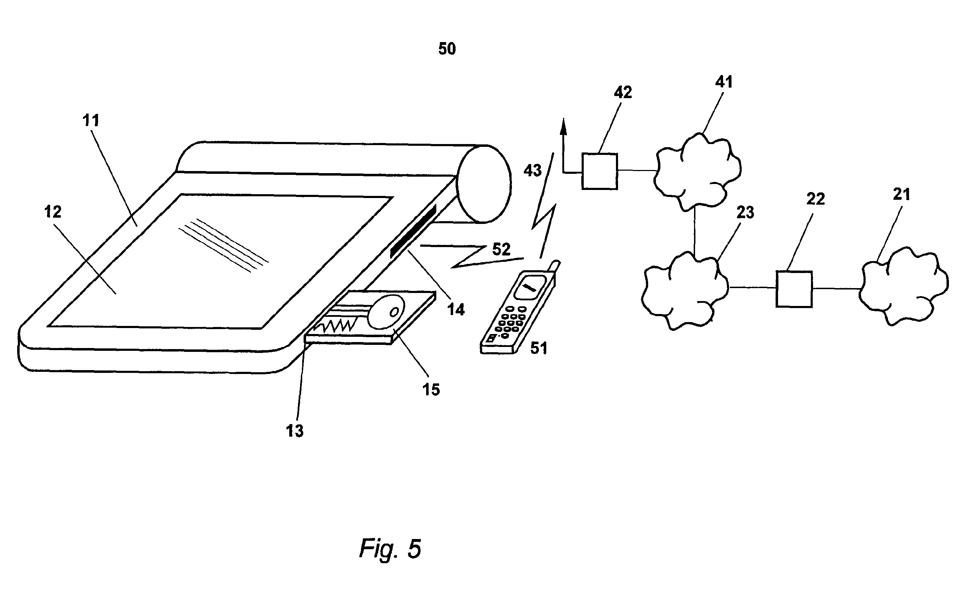

Fig. 5 zeigt ein weiteres mobiles System 50, bei dem die Verbindung zum Internet 21 wiederum über das Mobilfunknetz 41 erfolgt. Das System 50 umfasst ein Mobiltelefon 51, das beispielsweise gemäß dem GSM-Standard oder dem UMTS-Standard ausgeführt ist, und zur Kommunikation 43 mit der Basisstation 42 des Mobilfunknetzes 41 geeignet ist. Die Kommunikation 52 zwischen dem Internet-Endgerät 11 und dem Mobiltelefon 51 erfolgt, ähnlich wie mit Bezug auf Fig. 3 beschrieben, mittels Radiowellen oder Licht. Die Schnittstelle 14 und das Mobiltelefon 51 sind dazu beispielsweise gemäß der Bluetooth-Spezifikation ausgeführt. Da die Kommunikationen 43 und 52 drahtlos erfolgen, wird in dieser Ausführungsform eine hohe Mobilität und Flexibilität erreicht.

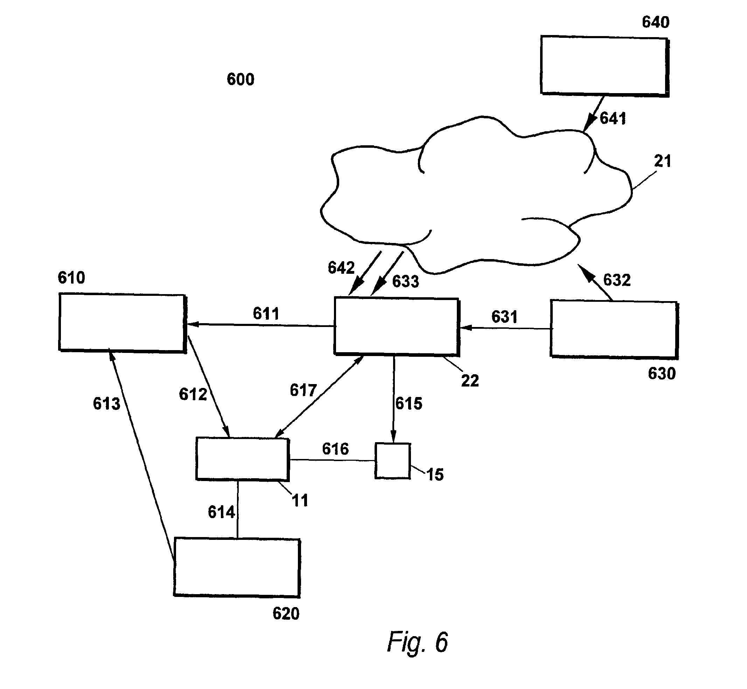

Fig. 6 veranschaulicht die Verwendung des Internet-Endgeräts 11 und des Identifikationsmoduls 15 in einem kommerziellen System 600. Ein Hersteller 610 produziert das Internet-Endgerät 11, das direkt oder über einen Handels- bzw. Vertriebspartner zu dem Anwender 620 gelangt 612. Der Hersteller 610 erwartet für das Internet-Endgerät 11 einen angemessenen Erlös. Ein Internet-Dienstanbieter 22 bietet dem Anwender 620 Zugang zum Internet 21. Dieser Zugang zum Internet 21 kann für den Anwender 620 kostenpflichtig oder kostenfrei sein. Ein kostenpflichtiger Zugang kann beispielsweise über die Dauer des Zugangs und gegebenenfalls beispielsweise über eine monatliche Grundgebühr berechnet werden, oder pauschal abgerechnet werden.

Alternativ kann der Zugang zum Internet 21 ganz oder teilweise werbefinanziert sein. Ruft der Anwender 620 beispielsweise während einer Verbindung zum Internet 21 Informationen 641 eines Informations-Anbieters (Content Provider) 640 auf, werden diese Informationen 642 über das Internet 21 und den Internet-Dienstanbieter 22 an den Anwender 620 übertragen. Der Internet-Dienstanbieter 22 hat mit einem Werber 630 vereinbart, dass der Internet-Dienstanbieter 22 Werbung 633 des Werbers 630 zusammen mit den Informationen 642 an den Anwender 620 überträgt, wobei der Werber 630 die Werbung 632 in das Internet 21 einspeist. Dafür erwartet der Internet-Dienstanbieter 22 eine angemessene Vergütung 634 von dem Werber 630. Alternativ kann der Werber 630 die Werbung 632 direkt an den Internet-Dienstanbieter 22 liefern.

Da der Internet-Dienstanbieter 22 einen Teil seines Erlöses aus dem gegebenenfalls kostenpflichtigen Zugang und gegebenenfalls werbebezogenen Vergütungen an den Hersteller 610 weitergibt 611, kann die Vergütung 613, die der Anwender 620 für das Internet-Endgerät 11 an den Hersteller 610 leistet, reduziert werden oder sogar ganz entfallen.

Der Internet-Dienstanbieter 22, der das Internet-Endgerät 11 des Anwenders 620 ganz oder teilweise finanziert hat, wird, um sicherzustellen, dass der Anwender 620 das Internet-Endgerät 11 nur zur Verbindung 617 über seinen Dienst verwendet 614, das Identifikationsmodul 15 an den Anwender 620 ausgeben. Da das Internet-Endgerät 11 die Verbindung 617 zum Internet 21 nur über den Internet-Dienstanbieter 22 in Verbindung 616 mit dem Identifikationsmodul 15 aufbaut, wird eine andere, missbräuchliche Verwendung des Internet-Endgeräts unterbunden.

In einer alternativen Ausführungsform kann das Identifikationsmodul 15 Konfigurationsdaten enthalten, die neben dem Internet-Dienstanbieter 22 auch den Informationsanbieter 640 identifizieren, so dass der Informationsanbieter 640 in das System 600 weiter eingebunden werden kann.

Das erfindungsgemäße System 600 unterstützt somit ein Verfahren zum Bereitstellen eines Internet-Dienstes 22 an einen Anwender 620, wobei das Verfahren umfasst: das Zuordnen eines Identifikationsmoduls 15 zu einem Internet-Endgerät 11 und dem Internet-Dienst 22, wobei das Identifikationsmodul 15 geeignet ist, das Internet-Endgerät 11 freizuschalten und das Internet-Endgerät 11 mit dem Internet-Dienst 22 zu verbinden, das Bereitstellen des Internet-Endgeräts 11 und des Identifikationsmoduls 15 an den Anwender 620, das Bereitstellen des Internet-Dienstes 22 über das Internet-Endgerät 11 an den Anwender 620 unter der Voraussetzung, dass das Internet-Endgerät 11 durch das Identifikationsmodul 15 freigeschaltet ist, und das Finanzieren des Internet-Endgeräts 11 basierend der Nutzung des Internet-Dienstes 22 durch den Anwender 620. Weiterhin kann das Verfahren das Sperren des Zugangs zum Internet 21 umfassen für den Fall, dass das Internet-Endgerät 11 nicht durch das Identifikationsmodul 15 freigeschaltet ist. Weiterhin kann das Verfahren das Sperren des Zugangs zu anderen Internet-Diensten umfassen. Weiterhin kann der Schritt des Bereitstellens des Internet-Dienstes 22 an den Anwender 620 das Bereitstellen von Werbung 632, 633 eines Werber 630 an den Anwender 620 innerhalb des Internet-Dienstes 22 umfassen und der Schritt des Finanzierens das Belasten des Werbers 630 für die Bereitstellung der Werbung 632, 632 an den Anwender 620 innerhalb des Internet-Dienstes 22 umfassen. Weiterhin kann das Verfahren ein Herstellen des Internet-Endgeräts 11 durch einen Hersteller 610 umfassen, und der Schritt des Finanzierens zumindest teilweise die Grundlage für die Entrichtung des Herstellerabgabepreises für das Internet-Endgerät 11 an den Hersteller bilden.

## Patentansprüche

1. Internet-Endgerät (11), umfassend:
eine berührungsempfindliche Anzeige (12) und
eine Einrichtung (13) zur Kommunikation mit einem koppelbaren Identifikationsmodul (15),
wobei
das Endgerät (11) für eine Verbindung zum Internet (21) Konfigurationsdaten von dem Identifikationsmodul (15) erhält.

2. Internet-Endgerät (11) nach Anspruch 1, wobei das Endgerät (11) als WebPad ausgeführt ist.

3. Internet-Endgerät (11) nach Anspruch 1 oder 2, weiterhin umfassend:
eine Einrichtung (14) zur drahtlosen Kommunikation, vorzugsweise gemäß dem DECT-Standard, mit einer Basisstation (31),
wobei
das Endgerät (11) die Verbindung über die Einrichtung (14) zur drahtlosen Kommunikation aufbaut.

4. Internet-Endgerät (11) nach einem der Ansprüche 1 bis 3, wobei das Endgerät (11) die Verbindung automatisch nach Kommunikation mit dem Identifikationsmodul (15) aufbaut.

5. Internet-Endgerät (11) nach einem der Ansprüche 1 bis 4, wobei das Endgerät (11) die Verbindung über einen Internet-Dienstanbeiter(22), der durch die Konfigurationsdaten bestimmt ist, aufbaut.

6. Internet-Endgerät (11) nach einem der Ansprüche 1 bis 5, wobei sich das Endgerät (11) automatisch zur Kommunikation mit dem Identifikationsmodul (15) aktiviert, wenn das Identfikationsmodul (15) an das Endgerät (11) gekoppelt wird.

7. Internet-Endgerät (11) nach einem der Ansprüche 1 bis 6, wobei das Endgerät (11) die Verbindung nur nach Kommunikation mit einem Identifikationsmodul (15) aufbaut, das Schlüsseldaten enthält, die das Endgerät (11) freischalten.

8. Internet-Endgerät (11) nach einem der Ansprüche 1 bis 7, wobei das Identifikationsmodul (15) als Chipkarte ausgeführt ist.

9. Internet-Endgerät (11) nach einem der Ansprüche 1 bis 7, wobei das Identifikationsmodul (15) als Transponder ausgeführt ist.

10. Identifikationsmodul (15), umfassend:
Konfigurationsdaten für eine Verbindung eines Internet-Endgeräts (11) zum Internet (21).

11. Identifikationsmodul (15) nach Anspruch 10, wobei die Konfigurationsdaten umfassen:
Zugangsdaten zu einen Internet-Dienstanbieter (22).

12. Identifikationsmodul (15) nach Anspruch 10 oder 11, wobei die Konfigurationsdaten umfassen:
Teilnehmerdaten, die einen Benutzer des Endgeräts (11) identifizeren.

13. Identifikationsmodul (15) nach einem der Ansprüche 10 bis 12, wobei die Konfigurationsdaten umfassen:
Schlüsseldaten, die das Endgerät (11) freischalten.

14. Identifikationsmodul (15) nach einem der Ansprüche 10 bis 13, wobei die Konfigurationsdaten umfassen:
Dienstleistungsdaten, die freigeschaltete Dienstleistungen spezifizieren.

15. Identifikationsmodul (15) nach einem der Ansprüche 10 bis 14, wobei die Konfigurationsdaten umfassen:
Zahlungsdaten, die eine Vergütung für die Verbindung ermöglichen.

16. Identifikationsmodul (15) nach einem der Ansprüche 10 bis 15, wobei die Konfigurationsdaten umfassen:
Guthabendaten, die eine aktuelle Abrechnung der Verbindung ermöglichen.

17. Identifikationsmodul (15) nach einem der Ansprüche 10 bis 16, wobei das Identifikationsmodul (15) als Chipkarte ausgeführt ist.

18. Identifikationsmodul (15) nach einem der Ansprüche 10 bis 16, wobei das Identifikationsmodul (15) als Transponder ausgeführt ist.

19. Internet-basiertes System (60) zum Verbreiten von Informationen über einen spezifischen Dienstanbieter (22) an einen Teilnehmer, wobei:
der spezifische Dienstanbieter Zugang zum Internet (21) und ein Identifikationsmodul (15) nach einem der Ansprüche 10 bis 18 bereitstellt,
der Teilnehmer Daten, die die Informationen repräsentieren, über den Zugang bezieht und mittels eines Internet-Endgeräts (11) nach einem der Ansprüche 1 bis 9 auswertet, und
das Internet-Endgerät (11) nur in Verbindung mit dem Identifikationsmodul (15) des spezifischen Dienstanbieters Zugang zum Internet (21) erhält.
